Europäisches Patentamt

European Patent Office

Office européen des brevets

(11) Publication number: **0 104 220 B1**

(12) **EUROPEAN PATENT SPECIFICATION**

(45) Date of publication of patent specification: **17.09.86**

(51) Int. Cl.⁴: **H 04 B 1/58**

(21) Application number: **83901112.9**

(22) Date of filing: **22.03.83**

(86) International application number:
**PCT/SE83/00101**

(87) International publication number:
**WO 83/03504 13.10.83 Gazette 83/24**

(54) **SUPPLY CIRCUIT INCLUDED IN A DC-MAGNETIZED HYBRID TRANSFORMER.**

(30) Priority: **01.04.82 SE 8202104**

(43) Date of publication of application:
**04.04.84 Bulletin 84/14**

(45) Publication of the grant of the patent:
**17.09.86 Bulletin 86/38**

(84) Designated Contracting States:
**DE FR GB NL**

(56) References cited:
**DE-A-2 450 853**
**FR-A-1 604 188**
**FR-A-2 235 555**
**US-A-3 778 563**
**US-A-3 875 350**
**US-A-3 987 257**
**US-A-4 297 536**

(73) Proprietor: **TELEFONAKTIEBOLAGET L M ERICSSON**
**S-126 25 Stockholm (SE)**

(72) Inventor: **JAKI, Ivan**
**Storskiftesvägen 142**
**S-145 60 Norsborg (SE)**

(74) Representative: **Wennerholm, Kristian et al**
**TELEFONAKTIEBOLAGET L M ERICSSON**
**S-126 25 Stockholm (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### Technical field

The present invention relates to a supply circuit included in a telephone repeater connected between a two-wire line and the repeater to provide a transfer between the two-wire and four-wire circuits in the repeater. More fully, the invention relates to a supply circuit in such repeaters, used to transform the analogue telephone signals coming from the line, into PCM-coded signals and vice versa.

### Background art

When converting analogue telephone signals from a certain subscriber across a certain line, repeaters are used to provide two different signal paths. In one of these paths the analogue signals are coded to the PCM-coded signals and in the other a decoding of the digital PCM-coded signal flow is carried out. Furthermore, amplifiers are connected to compensate for the attenuation of the line. It is previously known to use a direct current magnetized hybrid transformer when dividing the input of the repeater towards the two-line, the transformer giving the desired current feeding to the subscriber's set connected to the line. At the same time, however, a DC-magnetizing of the transformer core is obtained.

A current feed circuit for a subscriber's line is described in FR—A—1 604 188. In this circuit two transistor circuits are incorporated in order to deliver a constant feeding current to the subscriber's set independently of the line length, i.e. the line impedance. In order to protect the transistor circuits from overcurrent a PTC-resistor is connected between each transistor and the feeding source.

A self adjusting balancing network for a hybrid circuit is previously known by US—A—4.297.539. In this known network, diodes are incorporated which constitute a variable dynamic impedance in the hybrid circuit. When the line impedance is varied i.e. for different line lengths the dynamic impedance is varied to provide a matching to the subscriber's line impedance for the speech signals. This known self-adjusting network does not provide variable resistive values for the DC-feed current to the subscriber's line when the line length varies.

### Disclosure of the invention

When constructing transformer hybrids included in repeaters, certain demands are put regarding the design of the hybrid and consideration must be given to the DC-magnetizing of the transformer. Firstly the input terminals towards the two-wire side should be balanced to an earth point, since otherwise so called longitudinal currents arise across the line. Furthermore the transformer hybrid should fulfil the acoustic feedback attenuation demands on the four-wire side for the line impedance of the actual two-wire side. Operation attenuation distortion in the speech band should be low (for example, Ad<0.5 dB). Finally the echo attenuation on the two-wire side has to be high for impedances, i.e. line and subscriber's set impedances, which are connected to the two-wire side of the hybrid. Otherwise reflections arise across the line between the hybrid and the subscriber's set.

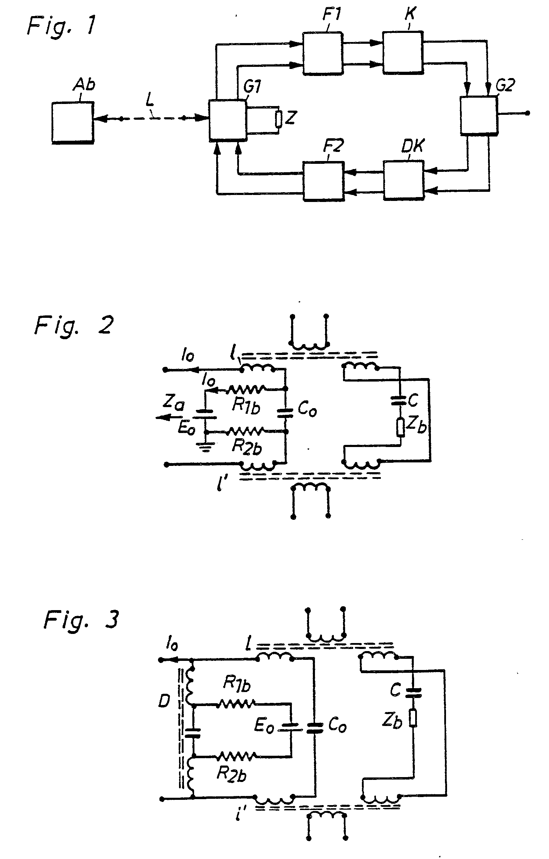

Besides there will be problems with a DC-magnetized hybrid transformer to prevent incoming speech voltages being short-circuited via the current loop through which direct current is applied from the battery towards the line. Previously current supply has been carried out across a mid point capacitor $C_o$ or a choke D has been connected in series with the DC-voltage source, see appended Figures 2 and 3, respectively.

The DC-premagnetizing of some of the windings, I, I' is defined according to

$$\frac{L \cdot I_o^2}{V_{Fe}} = 12.57 \cdot 10^{-9} \; \mu\text{rev} \cdot H_o^2 \qquad (1)$$

where

$\mu_{rev}$=the reversible permeability and $H_o$=the coercive force of the transformer iron core.

L=Inductance of the windings, $I_o$=premagnetizing current, $V_{fe}$=core volume. According to equation (1), previously known current feed alternatives demand according to figures 2 and 3 large core volume of the hybrid transformer and the choke, respectively, especially if the feed current $I_o$ is high. Higher feed currents also imply several other problems.

a) The temperature in the transformer windings increases according to

$$T=T(P), P=I_o^2 R_k \qquad (2)$$

$R_k$=Copper resistivity of the windings I,I'.

b) In particular a temperature increase $T_m$ is obtained in the box where the feed resistors $R_{1b}$ and $R_{2b}$ are placed according to

$$T_m=T_m(P), P=I_o^2(R_{1b}+R_{2b}+R_k) \qquad (3)$$

This implies a more rapid ageing of the components, in particular the ageing of the current feed resistors $R_{1b}$ and $R_{2b}$ is critical.

c) At a low-ohmic current feed alternative the current feed resistors $R_{1b}$ and $R_{2b}$ are of low resistance. At overvoltages, for example, upon thunderbreak, the energy increases according to

$$W=\frac{U^2}{R_{b1}, R_{b2}} \qquad (4)$$

d) In the known current feed principles according to figures 2, 3 and 4 it is particularly difficult to attain a high echo attenuation $A_e$ for low frequencies if the current feed resistors $R_{1b}$, $R_{2b}$ are of low resistance.

According to the invention the above mentioned problems are solved, on the one hand by transforming the feed resistance $R_{1b}$, $R_{2b}$ and, on the other hand by a special current limitation by means of PTC resistors as set out in the characterizing part of claim 1.

Brief description of drawings

The invention will be fully described in the light of prior art with reference to the accompanying drawings, where figure 1 shows a block diagram of a telephone repeater and its connection to a subscriber via a two-wire line, figures 2, 3 and 4 show three different embodiments of a hybrid transformer of known kind, figure 5 shows a circuit diagram of a current limiter with an autotransformer according to the invention. Figure 6 and 7 show two hybrid structures in which the inventive principle is applied. Figure 8 shows the variation of the feed current $I_o$ as a function of the line length and how the feed resistance varies with the line length. Figure 9 shows the characteristics of a PTC-resistor.

Embodiments

Figures 2, 3 and 4 show the circuit diagram of previously known embodiments of the hybrid coupling circuit G1 in figure 1 as described in the Swedish application No. 8102610—6. In the embodiment according to figure 2 two windings l, l' of the hybrid transformer are fed from a voltage source $F_o$ connected to each winding via the resistors $R_{1b}$, $R_{2b}$ respectively. This hybrid structure can be used if the DC-current $I_o$ is low and if the value of the feed resistors $R_{1b}$ and $R_{2b}$ is essentially higher than the impedance of the center point capacitor $C_o$ at the lowest frequencies in the passband, i.e.

$$R_b > \frac{1}{\omega C_o} \qquad (5)$$

In another alternative according to figure 3 the supply voltage source $E_o$ is connected in series and between two different windings of a choke D. The coupling according to figure 3 is more advantageous and simplier to dimension. However, the choke D demands a large volume if it is realized with passive components. The embodiment according to figure 3 can as a whole not be used if the mechanical construction of the circuit card demands limited mounting height just dependent on the choke D.

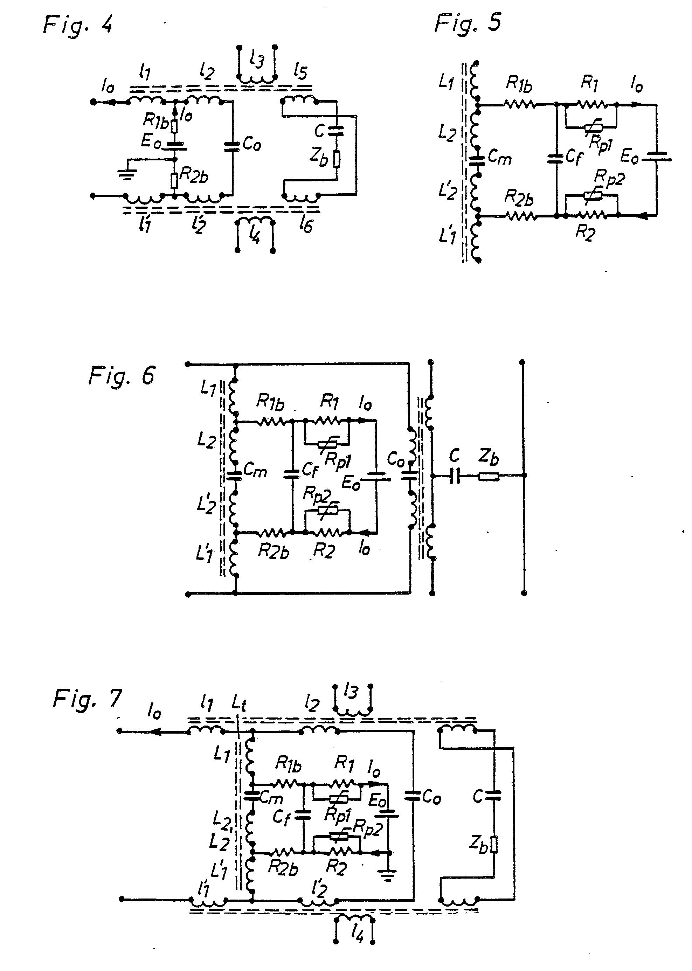

The hybrid embodiment according to figure 4 has several advantages as compared with figures 2 and 3. These advantages are extensively described in the above mentioned Swedish patent application.

In figure 5 an embodiment is shown of a hybrid transformer according to the invention. In series with the supply voltage feed source $C_o$ which in the first place should supply a subscriber with DC-current, a first and a second parallel circuit of resistors are connected. Each parallel circuit consists of a PTC-resistor $R_{p1}$ and $R_{p2}$, respectively

and a resistor R1 and R2, respectively. In parallel with this structure a capacitor $C_f$ is connected. To each side of the capacitor $C_f$ feed resistors $R_{1b}$, $R_{2b}$ are connected. The other side of resistors $R_{1b}$ and $R_{2b}$ is connected to the respective terminal between the windings $L_1$, $L_2$ and $L'_1$, $L'_2$, respectively of a balanced auto transformer. This transformer corresponds to the autotransformer $l_1$, $l_2$ and $l'_1$, $l'_2$ in figure 4 and includes like this transformer a capacitor $C_m$ (corresponding to the capacitor $C_o$), to divide the transformer into two winding halves. The capacitor $C_f$ operates as an AC short-circuiting for the speech signals, the resistors $R_{1b}$, $R_{2b}$ defining the resistance which is seen from the two-wire side. It is important that the speech currents are isolated from the PTC-resistors $R_{p1}$, $R_{p2}$ since these do not have any well defined resistance and, in addition have great tolerances.

According to the invention the feed circuit connected to the hybrid transformer includes, apart from the voltage feed source and the current feed resistors, also PTC-resistors to attain essentially the same current feed to closely as well as to remotely located subscribers. From the customers' point of view there is a strong interest namely that the current feed resistors should be at low value to supply also the most remote telephone subscribers with required feed current $I_o$. In addition, it is prescribed that the current $I_o$ should exceed a certain value ($I_o \geq 23$ mA). If the feed current=$I_o$, $R_o$=the internal resistance of the subscribers set, $R_1$=the line resistance (proportional to the line length) it is obtained:

$$I_o = \frac{E_o}{R_o + R_1 + R_b} \qquad (6)$$

Where $R_b$ is the resistance of the resistor network according to figure 5, i.e.

$$R_b = R_{1b} + R_{2b} + \frac{R_1 \cdot R_{p1}}{R_1 + R_{p1}} + \frac{R_2 \cdot R_{p2}}{R_2 + R_{p2}}$$

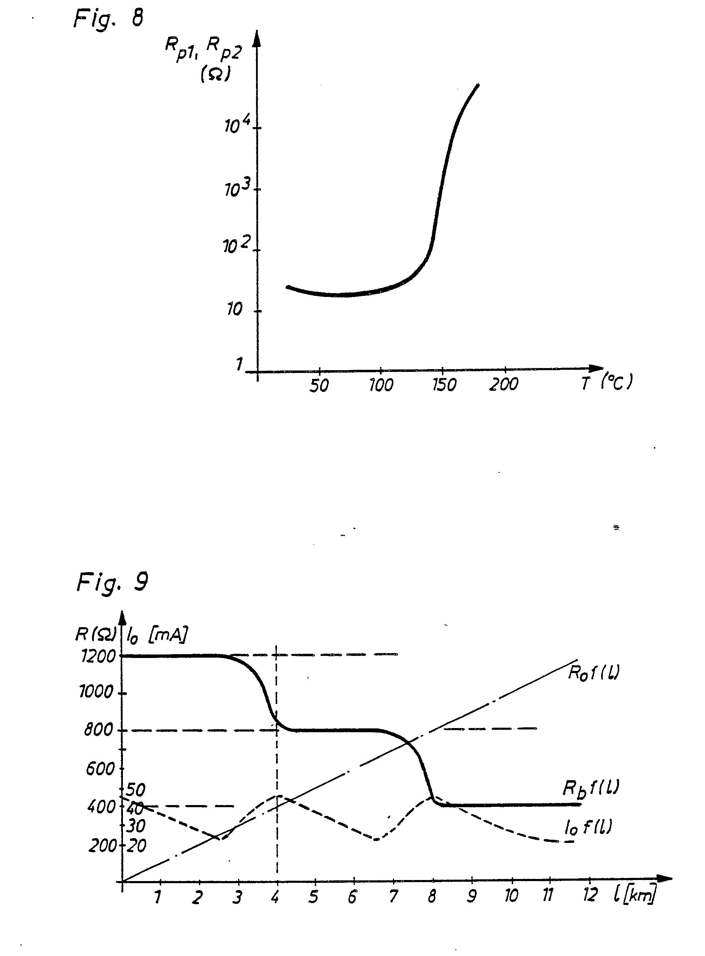

From the relation (6) above it can be seen that the line resistance $R_1$ can increase with the value with which the feed resistance decreases when the feed current $I_o$ is unchanged. Problems however arises at low feed resistance in the case that a subscriber is located near the hybrid transformer (the repeater), since also the line resistance $R_1$ than is low. At a feed resistance 2×200 ohm the feed current $I_o$ varies between 115—23 mA due to the distance of the subscriber to the repeater. At low line resistance $R_1$ the feed current $I_o$ tends to be high. A high feed current $I_o$, however, implies in the circuit according to figure 5 that the resistance of the PTC-resistors increases which implies that the current $I_o$ decreases. When the line length increases for a remote subscriber, the feed current tends to decrease. This implies that the power across PTC-resistors decreases and their resistance decreases. Figure 8 shows schematically that the resistance of a PTC-resistor "switches" from a low to a high value when a certain winding temperature $T_o$ is exceeded, i.e. when the power due to the feed current $I_o$ is exceeded. Figure 9 shows in a diagram the resistance $R_o$ according to the above, the sum $R_o$ of the subscribers resistance (the set resistance) and the line resistance and the variation of the feed current with the line length. In a circuit according to the invention the feed resistance $R_b$ can be chosen to be approximately inversely proportional to the resistance of the load, i.e. for example the feed resistance is 400 ohm for a remote subscriber, at a mean distance 800 ohm and for a close subscriber 1200 ohm. The transfer to different feed resistance values is continuous according to figure 8 and is automatically controlled by the feed current $I_o$. It the feed current $I_o$ exceeds a certain value, for example $I_o \geq 45$ mA, one of the PTC-resistors is transferred according to figure 8 to a high-ohmic state and vice versa when the current $I_o$ decreases below said value.

Figures 6 and 7 show how the current feed circuit according to the invention is applied to two different embodiments of a hybrid transformer. In figure 6 the feed circuit is connected directly to the two-wire side via an auto transformer with the centre point capacitor $C_m$. The feed resistance $R_b$ is then transformed to a higher value $R_b'$, where

$$R_b' = R_b \left( \frac{n_1 + n_2}{n_1} \right)^2$$

where

$n_1$, $n_2$ are the number of turns of windings $L_1$, $L_1'$ and $L_2$, $L_2'$ respectively, in accordance with the principle according to figure 4.

In the embodiment according to figure 7 the feed circuit is connected to the two-wire side in two stages on the one hand via the auto transformer $L_t$ and on the other hand via the auto transformer $l_1$, $l_2$, $l'_1$, $l'_2$, c.f. figure 4. If supposed that the number of turns and the ratio in the transformers is equal it is in the case obtained the feed resistance

$$R_b' = R_b \left( \frac{n_1 + n_2}{n_1} \right)^4$$

where

$n_1$, $n_2$ are the number of turns as above.

A transformed feed resistance implies a lower attenuation between the two-and four-wire side and vice versa and a higher echo attenuation on the two-wire side. At the same time as regards the DC a low ohmic character of the feed source is obtained. The advantages which is attained with the feed circuit according to the invention in combination with an auto transformer is primarily:

Less operational attenuation distortion withim the speech band at low frequences.

Upon a suitable dimensioning of the capacitor $C_m$ and the auto transformer $L_t$ the operational attenuation increases for the frequences 150—100 Hz.

The thunder effect will be advantageously contributed for all hubrid components, especially the capacitor $C_o$ will have a low thunder voltage.

## Claims

1. A supply circuit included in a DC-magnetized hubrid transformer connected between a two-wire line and two four-wire connections, containing a supply voltage source ($E_o$) and two current feed resistors ($R_{1b}$, $R_{2b}$) connected respectively to the common connection point in each of two sets of two winding parts ($L_1$, $L_2$ and $L_1'$, $L_2'$, respectively) in a primary winding part working as an auto transformer in the hubrid transformer, only one winding part ($L_1$, $L_1'$) in each set being magnetized, characterized in that respective resistor networks each including a PTC-resistor ($R_{p1}$, $R_{p2}$) are connected directly to said common connection points of the two winding parts via said feed resistors ($R_{1b}$, $R_{2b}$) and to the supply source ($E_o$), to decrease the resistance of the supply circuit upon decreased supply current and vice versa.

2. Supply circuit according to claim 1, characterized in that each resistor network ($R_1$, $R_{p1}$ and $R_2$, $R_{p2}$) is connected in series with the associated current feed resistor ($R_{1b}$, $R_{2b}$) and the supply source ($E_o$).

3. Supply circuit according to claim 1 or 2, characterized in that each resistor network consists of a PTC-resistor ($R_{p1}$, $R_{p2}$) connected in parallel with a temperature dependent resistor ($R_1$, $R_2$).

4. Supply circuit according to claim 1, 2 or 3, characterized in that a capacitor ($C_f$) is connected between the two common points to the respective resistor network ($R_1$, $R_{1p}$, and $R_2$, $R_{2p}$, respectively) and the current feed resistors ($R_{1b}$, $R_{2b}$) to shunt the speech signals from the resistor network and the feed source.

## Patentansprüche

1. Versorgungsschaltung, die in einem Gleichstrom-magnetisierten Gabelwandler einbezogen ist, der zwischen einer Zweidrahtleitung und zwei Vierdrahtverbindungen angeschlossen ist, enthaltend eine Versorgungsspannungsquelle ($E_0$) und zwei Strom-Koppel-Widerstände ($R_{1b}$, $R_{2b}$), die jeweils mit einem gemeinsamen Verbindungspunkt in jedem von zwei Sätzen von zwei Windungstellen (jeweils $L_1$, $L_2$ und $L_1'$, $L_2'$) verbunden sind, in einem Primärwicklungsteil, welcher als automatischer Wandler im Gabelwandler arbeitet, wobei nur ein Wicklungsteil ($L_1$, $L_1'$) in jedem Satz magnetisiert ist, dadurch gekennzeichnet, daß entsprechende Widerstandsnetzwerke, von denen jedes einen PTC-Widerstand ($R_{p1}$, $R_{p2}$) enthält, direkt mit den gemeinsamen Verbindungspunkten der beiden Wicklungsteile über die Kopplungswiderstände $(R_{1b}, R_{2b})$ und mit der Versorgungsquelle $(E_0)$ verbunden sind, um den Widerstandswert der Versorgungsschaltung bei vermindertem Versorgungsstrom und umgekehrt zu verringern.

2. Versorgungsschaltung nach Anspruch 1, dadurch gekennzeichnet, daß jedes Widerstandsnetzwerk $(R_1, R_{p1}$ und $R_2, R_{p2})$ in Reihe mit dem zugeordneten bzw. verknüpften Stromkopplungswiderstand $(R_{1b}, R_{2b})$ und mit der Versorgungsquelle $(E_0)$ verbunden ist.

3. Versorgungsschaltung nach Anspruch 1 oder 2, dadurch gekennzeichnet, daß jedes Widerstandsnetzwerk aus einem PTC-Widerstand $(R_{p1}, R_{p2})$ besteht, der parallel zu einem temperaturabhängigen Widerstand $(R_1, R_2)$ angeschlossen ist.

4. Versorgungsschaltung nach Anspruch 1, 2 oder 3, dadurch gekennzeichnet, daß ein Kondensator $(C_f)$ zwischen zwei gemeinsamen Punkten mit dem entsprechenden Widerstandsnetzwerk (jeweils $R_1$, $R_{1p}$ und $R_2$, $R_{2p}$) und den Stromkopplungswiderständen $(R_{1b}, R_{2b})$ angeschlossen ist, um die Sprachsignale vom Widerstandsnetzwerk und der Versorgungsquelle zu shunten.

## Revendications

1. Un circuit d'alimentation incorporé dans un transformateur différentiel magnétisé en courant continu, connecté entre une ligne bifilaire et deux connexions quadrifilaires, contenant une source de tension d'alimentation $(E_o)$ et deux résistances d'alimentation en courant $(R_{1b}, R_{2b})$ connectées respectivement au point de connexion commun dans chaque jeu parmi deux jeux de deux parties d'enroulement (respectivement $L_1$, $L_2$ et $L'_1$, $L'_2$) dans une partie d'enroulement primaire fonctionnant en autotransformateur dans le transformateur différentiel, une seule partie d'enroulement $(L_1, L'_1)$ dans chaque jeu étant magnétisée, caractérisé en ce que des réseaux de résistances respectifs, comprenant chacun une résistance à coefficient de température positif $(R_{p1}, R_{p2})$, sont directement connectés aux points de connexion communs des deux parties d'enroulements, par l'intermédiaire des résistances d'alimentation $(R_{1b}, R_{2b})$ et à la source d'alimentation $(E_o)$, pour diminuer la résistance du circuit d'alimentation sous l'effet d'une diminution du courant d'alimentation, et inversement.

2. Circuit d'alimentation selon la revendication 1, caractérisé en ce que chaque réseau de résistances $(R_1, R_{p1}$ et $R_2, R_{p2})$ est connecté en série avec la résistance d'alimentation en courant associée $(R_{1b}, R_{2b})$ et la source d'alimentation $(E_o)$.

3. Circuit d'alimentation selon la revendication 1 ou 2, caractérisé en ce que chaque réseau de résistances consiste en une résistance à coefficient de température positif $(R_{p1}, R_{p2})$, connectée en parallèle avec une résistance dépendant de la température $(R_1, R_2)$.

4. Circuit d'alimentation selon la revendication 1, 2 ou 3, caractérisé en ce qu'un condensateur $(C_f)$ est connecté entre les deux points communs du réseau de résistances respectif (respectivement $R_1$, $R_{1p}$, et $R_2$, $R_{2p}$) et les résistances d'alimentation en courant $(R_{1b}, R_{2b})$, pour dériver les signaux de parole par rapport au réseau de résistances et à la source d'alimentation.

*Fig. 1*

*Fig. 2*

*Fig. 3*

1

*Fig. 4*

*Fig. 5*

*Fig. 6*

*Fig. 7*

Fig. 8

Fig. 9